# EUROPEAN PATENT APPLICATION

(11) **EP 4 800 495 A1**
(43) Date of publication of application: **02.09.2026**
(21) Application number: 26159255.4
(22) Date of filing: 18.02.2026
(51) Int. Cl.: G05B 19/042, G06F 8/38, G06F 9/451

(54) **PROCESS CONTROL SYSTEM WITH AUTOMATIC GENERATION OF HUMAN-MACHINE INTERFACES**

(30) Priority: 28.02.2025 US 202519067011
(71) Applicant: Rockwell Automation Technologies, Inc., Mayfield Heights, OH 44124 (US)
(72) Inventor: Montpas, Todd A., Mayfield Heights, OH, 44124 (US); Adam, Holger, Mayfield Heights, OH, 44124 (US); Aardsma, Daniel, Mayfield Heights, OH, 44124 (US); Petricca, Daryl, Mayfield Heights, OH, 44124 (US); Rice, Clifton L., Mayfield Heights, OH, 44124 (US)
(74) Representative: Grünecker Patent- und Rechtsanwälte PartG mbB

(57) **Abstract**

A system for generating a human-machine interface (HMI) from control code having standard objects. Control code is generated from a model of an automation system suitable for generating a three-dimensional rendering of the automation system and simulating the automation system. The model may also be used for is used for SIL and HIL testing. Standard objects form the control code are used to generate an HMI that includes status indicators for an actuator and control elements for an actuator. The generated HMI is linked to the data sources for the status indicators and the actuator controlled by the control elements. Interacting with the HMI causes a change in the behavior (e.g., position, etc.) of the actuators and results in affecting a condition of the process control environment.

## Description

### BACKGROUND

The present disclosure relates generally to process control. Process control systems may include human machine interfaces (HMIs) that allow an operator to view information related to an actuator of the process control system and/or issue commands to an actuator of the process control system.

Process control systems may be designed using a multi-step design and test process. Ladder logic or other graphical or semi-graphical programming languages or a traditional text-based language (e.g., C or C++) may be used to represent the control instructions. A user interface (UI) or HMI for interacting with the process control system may be created. Elements of the HMI to the appropriate actuators (e.g., to send commands) and/or sources of data (e.g. for display and indication purposes). After the control code and HMI is developed the process control system is tested. A commissioning agent may execute a number of tests on the automation system using the control code and/or the HMI to ensure that the operations meet the original requirements of the specification.

### SUMMARY

One embodiment of the present disclosure relates to a system for generating a human-machine interface (HMI) of a process control environment, the system includes one or more memory devices having instructions stored thereon that, when executed by one or more processors, cause the one or more processors to perform operations. The operations include generating a three-dimensional rendering of at least a portion of the process control environment having one or more control apparatuses with one or more actuators. A respective actuator of the one or more actuators is associated with an object within control code for the process control environment and the object conforms to a standardized class format including a linked data source for a status indicator of the respective actuator and a command for a control element of the respective actuator. The operations also include scanning the control code for at least one included object associated with the one or more actuators that conform to the standardized class format. The operations also include generating, for an included object of the at least one included object, an HMI representation for the respective actuator associated with the included object including the status indicator and the control element. The operations also include receiving information from the linked data source of the included object and updating a formatting of the status indicator based on the information. The operations also include affecting a condition of the process control environment by communicating the command of the included object to the respective actuator associated with the included object responsive to a user interaction with the control element of the HMI representation.

In some embodiments, the operations also include simulating the three-dimensional rendering of the portion of the process control environment using the control code.

In some embodiments, the respective actuator associated with the included object is a virtual actuator of the three-dimensional rendering.

In some embodiments, scanning the control code includes scanning for objects with a tag indicating that the objects conform to the standardized class format.

In some embodiments, the command is communicated to all actuators satisfying a similarity criterion with the respective actuator associated with the included object.

In some embodiments, the command is of a plurality of commands for a plurality of control elements and the standardized class format also includes a role indicating one or more control elements of the plurality of control elements to be included in the HMI for a user of the role.

In some embodiments, generating the three-dimensional rendering includes using a user interface within which the one or more control apparatuses are arranged to represent the process control environment.

In some embodiments, the operations also include generating the control code from the three-dimensional rendering.

Another embodiment of the present disclosure relates to a method for generating a human-machine interface (HMI) of a process control environment. The method includes generating a three-dimensional rendering of at least a portion of the process control environment having one or more control apparatuses with one or more actuators. A respective actuator of the one or more actuators is associated with an object within control code for the process control environment, and the object conforms to a standardized class format including a linked data source for a status indicator of the respective actuator and a command for a control element of the respective actuator. The method also includes scanning the control code for at least one included object associated with the one or more actuators that conform to the standardized class format. The method also includes generating, for an included object of the at least one included object, an HMI representation for the respective actuator associated with the included object including the status indicator and the control element. The method also includes receiving information from the linked data source of the included object and updating a formatting of the status indicator based on the information. The method also includes affecting a condition of the process control environment by communicating the command of the included object to the respective actuator associated with the included object responsive to a user interaction with the control element of the HMI representation.

In some embodiments, the method also includes simulating the three-dimensional rendering of the portion of the process control environment using the control code.

In some embodiments, the respective actuator associated with the included object is a virtual actuator of the three-dimensional rendering.

In some embodiments, scanning the control code includes scanning for objects with a tag indicating that the objects conform to the standardized class format.

In some embodiments, the command is communicated to all actuators satisfying a similarity criterion with the respective actuator associated with the included object.

In some embodiments, the command is of a plurality of commands for a plurality of control elements and the standardized class format also includes a role indicating one or more control elements of the plurality of control elements to be included in the HMI for a user of the role.

In some embodiments, generating the three-dimensional rendering is performed using a user interface within which the one or more control apparatuses are arranged to represent the process control environment.

In some embodiments, the method also includes generating the control code from the three-dimensional rendering.

Another embodiment of the present disclosure relates to a system for generating a human-machine interface (HMI) of a process control environment, the system includes a server. The server is configured to generate a three-dimensional rendering of at least a portion of the process control environment having one or more control apparatuses with one or more actuators. The server is also configured to generate control code for the one or more actuators, the control code including a code object for a respective actuator of the one or more actuators. The code object conforms to a standardized class format including a linked data source for a status indicator of the respective actuator and a command for a control element of the respective actuator. The server is also configured to scan the control code for the code object for the respective actuator. The server is also configured to generate interface instructions to generate an HMI representation for the respective actuator associated with at least one code object including the status indicator and the control element and communicate the control code and the interface instructions to a controller for the respective actuator. The system also includes a controller for the respective actuator. The controller is configured to receive information from the linked data source of the code object and updating a formatting of the status indicator based on the information and affect a condition of the process control environment by communicating the command of the code object to the respective actuator associated with the code object responsive to a user interaction with the control element of the HMI representation.

In some embodiments, the server is also configured to simulate the three-dimensional rendering of the portion of the process control environment using the control code.

In some embodiments, the command is communicated to all actuators satisfying a similarity criterion with the respective actuator associated with the code object.

In some embodiments, the command is of a plurality of commands for a plurality of control elements and the standardized class format also includes a role indicating one or more control elements of the plurality of control elements to be included in the HMI for a user of the role.

This summary is illustrative only and not intended to be limiting.

### BRIEF DESCRIPTION OF THE DRAWINGS

FIG. 1 is a schematic block diagram of a system for generating a human machine interface for a process control system, according to some embodiments.
FIG. 2 is a schematic block diagram of a system for rendering a three-dimensional view of a process control system and generating control and monitoring code for the process control system, according to some embodiments.
FIG. 3 is a schematic block diagram of a controller in the process control system of FIG. 1, according to some embodiments.
FIG. 4 is an illustrative view of a three-dimensional rendering and associated code, according to some embodiments.
FIG. 5A is a view of a generated HMI, according to some embodiments.
FIG. 5B is another view of a generated HMI, according to some embodiments.
FIG. 5C is a view of a faceplate windows in the generated HMI, according to some embodiments.
FIG. 6 is a flow of operations affecting a process control environment using generated code, according to some embodiments.

### DETAILED DESCRIPTION

### Overview

Traditional process control systems are designed using a multi-step design and test process. The automation system to be controlled will be analyzed and control code will be manually created for the process control system based on the equipment of the automation system and purpose thereof. The control code may be ladder logic or other graphical or semi-graphical programming languages or the control code may be a traditional text based code (e.g., C or C++). After control code has been generated, a user interface (UI) or HMI for interacting with the process control system may be created. Designing an HMI may include interacting with a palette of status indicators, buttons, text entry fields, etc. that can be laid out according to the equipment used in the automation system as well as the preferences of the operator or control designer. Designing the HMI may also include linking the HMI graphical elements with call back code that is linked to the appropriate actuators (e.g., to send commands) and/or sources of data (e.g. for display and indication purposes).

Testing may follow design of the control code and the HMI. In some industries, full three-dimensional renderings of the process control system may be generated so that the system designer can visualize the operation of the system and make appropriate adjustments, correcting incorrect behavior before the code and hardware for the code is ever installed on the automation system. Testing may include various stages progressively including more of the actual process control system hardware. For example, testing may begin with a software simulation of the control code (e.g., software-in-the-loop [SIL] testing) and then progress to physical controllers executing the control code and communicating with a computer simulation of the process (e.g., hardware-in-the-loop [HIL] testing).

Design and testing of process control systems may require a significant amount of time. Any automation of the process from designing code to completing HIL testing may provide significant savings of both time and labor and increase the probability of an on-schedule and on-budget release.

Systems and methods of the present disclosure allow automatic code generation and HMI design once the process is designed. For example, after a designer conceives the automation system (e.g., a process control environment, etc.), the designer can lay out the equipment in a three-dimensional rendering system. The equipment (e.g., actuators, devices, apparatuses, etc.) available in the three-dimensional rendering environment may be associated with actuators for which control code may be automatically generated. Additionally, an HMI may be generated for the same actuators. The control code and the HMI, generated from the three-dimensional rendering, can be used to simulate the environment represented by the rendering. For example, SIL testing can be performed shortly after the three-dimensional rendering of the process is created. The designer may monitor the SIL simulation prior to moving on to HIL. The designer may also make modifications to the generated code as allowed by the user interface, for example, to improve performance, or fix undesirable behavior. Code generation may save a significant amount of time and may reduce the need for designers to understand proprietary coding languages and/or design paradigms.

After testing the control code both in SIL and HIL testing environments. The process control system may be installed with the physical process control equipment. The commissioner of the equipment may execute similar tests as those performed in the SIL and HIL testing environments. Code changes can be simulated in SIL to ensure that the change will not have a deleterious effect on other test scenarios. The generated code executing in a process controller may cause the controller to send various commands to the actuators of the equipment. Commands may be issued by generating electric signals and communicating them to the actuators. For example, the electric signals may be analog values (e.g., a voltage provided by a PWM circuit) or values for the actuator communicated using a digital encoding for the value (e.g., a floating point representation, etc.).

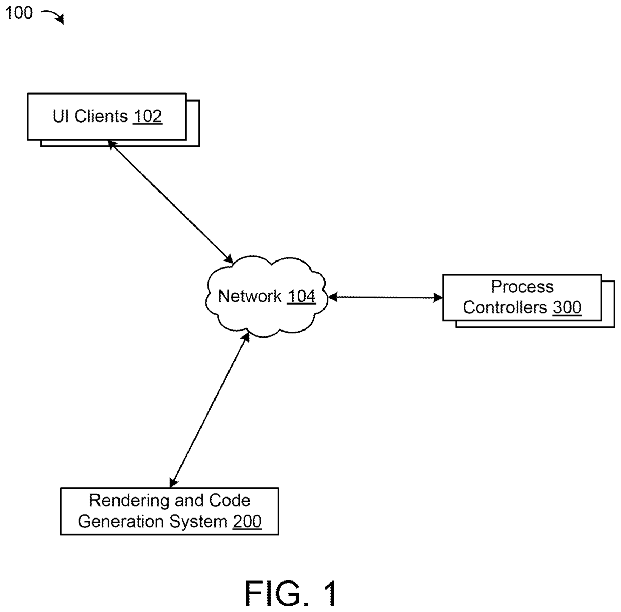

FIG. 1 shows a process control code generation environment 100 according to some embodiments. The process control code generation environment 100 may include one or more UI clients 102, a rendering and code generation system 200, and one or more process controllers 300 communicably connected over a network 104. In some embodiments, the general mode of operation of the process control code generation environment 100 is to provide a process control system designer a UI via the one or more UI clients 102. From the one or more UI clients 102 the process control system designer can construct a model of the automation system using the framework provided by the rendering and code generation system 200. The process control system designer may describe (e.g., layout, define, etc.) process control system equipment for rendering and generate code that may be uploaded to an appropriate controller of the one or more process controllers 300.

The network 104 can include routers, switches, antennas, computers, and any other hardware required to communicate information between the components of the process control code generation environment 100 (e.g., from the rendering and code generation system 200 to the one or more UI clients 102). A portion of the network 104 can be wireless and/or a portion of the network 104 can be wired. The network 104 can include one or more networks with routers to facilitate data transfer between the different networks.

The one or more UI clients 102 may be configured to generate a UI from instructions received from the rendering and code generation system 200 and/or the one or more process controllers 300. The UI may be a design UI for developing the three-dimensional rendering, generating the code (e.g., both code for controlling the equipment of the automation system and for the HMI) for the one or more process controllers 300 and/or uploading the code to the one or more process controllers 300. The one or more UI clients 102 may receive instructions for the design UI from the rendering and code generation system 200 over the network 104. The UI may also be the HMI. The HMI may be connected to the equipment of the automation system or the HMI may be connected to inputs of a simulation occurring in the rendering and code generation system 200. The HMI may be communicated to the one or more UI clients 102 by the one or more process controllers 300.

The one or more UI clients 102 may include an application configured to receive instructions (e.g., from the rendering and code generation system 200 or the one or more process controllers 300) for generating the design UI and/or the HMI. The application may be a standard application (e.g., a web browser) and the UI may be communicated via instructions encoded in JavaScript and/or cascading style sheets (CSS). In some embodiments, the application is proprietary and instructions and/or configurations for the application may be communicated using any application interface (e.g., binary, text-based, etc.). The application may present the UI based on the instructions received from the rendering and code generation system 200 and/or one or more process controllers 300.

The UI generated by the one or more UI clients 102 may also include buttons, text entry, and drag and drop interactions that allow the user to interact with the remote systems (e.g., the rendering and code generation system 200 or the one or more process controllers 300. The interactive components of the UI may allow the user to change the state of a remote system. For example, the UI may execute an API to add equipment to the rendering or to begin code generation. Additionally or alternatively, the interactive components of the UI (e.g., as an HMI) may communicate commands to the one or more process controllers 300 that may update the behavior of the control system and/or manually override an aspect of control.

The one or more process controllers 300 may be communicably connected to the equipment of the automation system. In some embodiments, the one or more process controllers 300 may communicate with the equipment over the network 104. Additionally or alternatively, the one or more process controllers 300 may have a separate network for communicating with the equipment or have a direct connection (e.g., an analog connection input and/or output) for communicating with the equipment.

The one or more process controllers 300 may generate electronic control signals for the actuators of the equipment. The electronic control signals may be in the form of digital communications provided to the actuators. Additionally or alternatively, the electronic control signals may be analog values for the actuators that communicate a particular value, position, motion, etc. for the actuator. The actuators may respond to the electronic control signals to cause a change in the automation system. For example, the actuators may be a motor that receives a position (e.g., angular position, number of revolutions, etc.) to which it should move. As yet another example, the actuator may be a solenoid that triggers linear motion or activates a switch of a relay. Actuators may also include pneumatic actuators, hydraulic actuators, thermal actuators, piezoelectric actuators, or any other device suitable for affecting motion or behavior of automation equipment.

The one or more process controllers 300 may also be configured to provide an HMI, for example, in the form of instructions communicated to the one or more UI clients 102. The HMI may provide an operator of the automation system with interactive components to control the automation system and/or manually override the automation system.

In some embodiments, the one or more process controllers 300 receive information related to the status of the equipment and/or actuators. For example, the one or more process controllers 300 may receive information related to the position of the equipment or one or more actuators thereof. The one or more process controllers 300 may receive information related to any errors or faults reported by the equipment. Information may be communicated by the equipment to the one or more process controllers 300 via the network 104, a private network, and/or a direct connection (e.g., using analog or binary inputs including contact switches, resistances, voltages, etc.)

### Rendering and Code Generation System

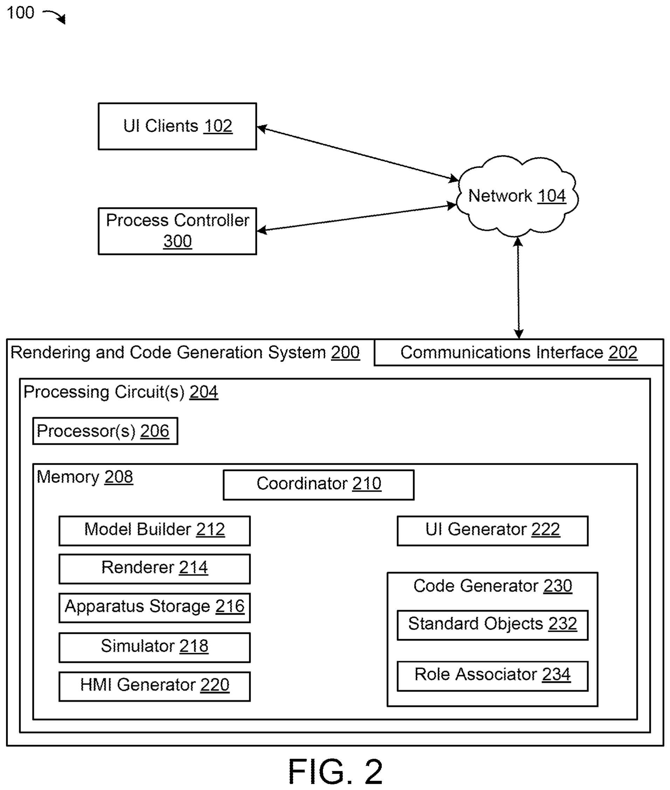

FIG. 2 shows a schematic block diagram of the rendering and code generation system 200 according to some embodiments. The rendering and code generation system 200 is shown to include a communications interface 202 and one or more processing circuits 204 having one or more processors 206 and memory 208.

The communications interface 202 may be configured to send and/or receive information over the network 104. In some embodiments, the components and features of the rendering and code generation system 200 are distributed over a number of processing circuits of different physical compute devices (e.g., instruction memory and storage may be configured on different physical devices in a cloud architecture). The communications interface 202 may be used to communicate between the various processing units.

The one or more processors 206 may be a general purpose or specific purpose processors, an application specific integrated circuit (ASIC), one or more field programmable gate arrays (FPGAs), a group of processing components, or other suitable processing components. The one or more processors 206 may be configured to execute computer code and/or instructions stored in the memories or received from other computer readable media (e.g., CDROM, network storage, a remote server, etc.). The one or more processors 206 may be configured in various computer architectures, such as graphics processing units (GPUs), distributed computing architectures, cloud server architectures, client-server architectures, or various combinations thereof. One or more first processors can be implemented by a first device, such as an edge device, and one or more second processors can be implemented by a second device, such as a server or other device that is communicatively coupled with the first device and may have greater processor and/or memory resources.

The memory 208 may include one or more devices (e.g., memory units, memory devices, storage devices, etc.) for storing data and/or computer code for completing and/or facilitating the various processes described in the present disclosure. The memory 208 may include random access memory (RAM), read-only memory (ROM), hard drive storage, temporary storage, non-volatile memory, flash memory, optical memory, or any other suitable memory for storing software objects and/or computer instructions. The memory 208 may include database components, object code components, script components, or any other type of information structure for supporting the various activities and information structures described in the present disclosure. The memory 208 may be communicably connected to the processors and can include computer code for executing (e.g., by the processors) one or more processes described herein.

The rendering and code generation system 200 may include a model builder 212, a renderer 214, apparatus storage 216, a simulator 218, an HMI generator 220, a UI generator 222, and a code generator 230. The components of the rendering and code generation system 200 may be managed by a coordinator 210.

In some embodiments, the rendering and code generation system 200 includes a coordinator 210. The coordinator 210 may be configured to control the timing and flow of data through the other circuitry, modules, or instruction sets of the rendering and code generation system 200. For example, the coordinator 210 may cause the modules or instructions to execute in a specific order to perform the function of the rendering and code generation system 200. In some embodiments, the coordinator 210 may route the information and/or outputs of other modules that are dependent on the information or use the information as an input. For example, the information from the simulator 218 may be routed to the UI generator 222 to be communicated over the network 104 and viewed on the one or more UI clients 102.

The model builder 212 may be configured to maintain one or more models of an automation system. The model builder 212 may provide APIs that are called by UI instructions provided by the UI generator 222 to the one or more UI clients 102. For example, the model builder 212 may have interfaces allowing for the creation of a model (e.g., an empty model, blank rendering, etc.), adding equipment (e.g., an actuator, device, apparatus, etc.) to a model, removing equipment from a model, and/or changing properties for equipment of the model (e.g., a location of the equipment, a type of the equipment, etc.).

In some embodiments, the rendering and code generation system 200 serves multiple of the one or more UI clients 102 at a given instant in time. The model builder 212 may be configured to uniquely identify a model and serve each model to the respective UI client 102 that is being used to configure (e.g., modify, adjust, create, etc.) the model. The application on the one or more UI clients 102 may be provided instructions by the UI generator 222 to save several changes locally (e.g., on the UI client) until a save button is clicked to start the appropriate functions of the model builder 212 to save the changes that have occurred since the last save. Additionally or alternatively, the changes may be communicated back to the model builder 212 of the rendering and code generation system 200 over the network 104 as they occur, potentially trading responsiveness to ensure that changes are not lost.

The model builder 212 may be configured to operate in combination with the UI generator 222 and the renderer 214. For example, the UI generator 222 provides the user access to the interfaces provided by the model builder 212. For example, a "new project" button or "create" button may instantiate an empty model, dragging an equipment from a palette to a rendering area may add the equipment to the model, dragging equipment to a trash bin may remove the equipment from the model, and right clicking the equipment may generate a properties menu from which properties can be changed. Other suitable interactions with the UI on the one or more UI clients 102 may be used to provide any of the model actions described herein or additional model changes useful for building the model. As equipment is added to the model using the model builder 212 the renderer 214 may generate a rendering of the model.

The renderer 214 may be configured to generate two-dimensional representations from a three-dimensional model. The renderer 214 may receive a model of the automation system with a location of one or more objects (e.g., equipment, devices, apparatuses, etc.) from the model builder 212. The renderer 214 may generate a two-dimensional representation of the one or more objects by projecting points of the three-dimensional models onto a plane as seen from a particular perspective provided to the renderer 214. For example, the rendering and code generation system 200 may, for a particular user, have a number of objects and the designer (e.g., by way of the one or more UI clients 102) may request to view the objects from a perspective defined by interacting with the UI (e.g., by pan and rotate interactions).

The three-dimensional model of an object may include a location for a number of points (e.g., vertices) relative to an anchor point (e.g., the point for which the location of the object is represented in the larger rendering). The three-dimensional model may also include connections between the points, for example, to define edges, and/or sides of the object. Using the information related to the points, their interconnection, and the perspective from which the two-dimensional rendering should be made, the renderer 214 may perform geometric calculations to determine where on the two-dimensional plane of a display screen or window, the various points should be placed. In some embodiments, the one or more objects may include surface materials and/or textures that are applied to sides of the object during rendering.

The three-dimensional models of the equipment or other objects may be stored by the apparatus storage 216. The three-dimensional model may be accessed by the renderer 214 to obtain the coordinates of an object relative to the anchor point of the three-dimensional model.

In some embodiments, the locations of the objects may be updated frequently. For example, the location of the objects may be updated by sensors of the physical automation system. The sensor measurements may be configured to update the location of the objects in the rendering to generate a digital twin of the physical object. The digital twin may be used to perform simulations of the object (e.g., by the simulator 218). The digital twin may be used to predict future locations of the object. Additionally or alternatively, the digital twin may be used to perform experimental updates to control parameters. For example, by observing how the changes in the control parameters affect the simulations of the digital twin. Simulations may also be performed without a physical counterpart. For example, initial conditions may be acquired by the renderer 214 by default locations or by user entry.

In some embodiments, a new location for the object is updated periodically (e.g., at a consistent frequency). The period may be fast enough such that a user viewing the output of the renderer 214 may perceive the object to be in continuous motion. The renderer 214 may produce an image that is lagged behind the physical object or the simulation from which the renderer 214 receives information related to the location of the object. It may, for example, be computationally intractable to generate a new location of the object, via simulation, at the speed required to appear as though the image is in continuous motion (e.g., 30 times a second, 60 times a second, etc.). Similarly, location information received over the network 104 from the sensors for a physical object may not be received at the required frequency to appear in continuous motion. The renderer 214 may interpolate between data received (e.g., from the simulator 218 or from the automation system) for two different times. The renderer 214 may generate location data via interpolation at the required frequency to cause the output to appear to be in continuous motion. Interpolation, however, may introduce a time lag as the renderer 214 may wait to acquire another location prior to generating interpolated locations for all data between the previous time the data was received and the current time.

The renderer 214 may be configured on the one or more UI clients 102. Advantageously, a minimal amount of information can be sent to the one or more UI clients 102. For example, the location of the equipment or other objects and the position of each actuator may be communicated over the network 104 to the one or more UI clients 102. Additionally or alternatively, the renderer 214 may be configured on the server for the rendering and code generation system 200. In such a configuration more data is communicated over the network 104 (e.g., the location of all points). However, the one or more UI clients 102 may not perform the geometric calculations of the renderer 214, allowing for the rendering and code generation system 200 to be accessed by simpler (e.g., without a GPU) hardware.

The apparatus storage 216 may be configured to store the three-dimensional models of any of the equipment (e.g., actuators, devices, apparatuses, etc.) or other objects used by the rendering and code generation system 200. The apparatus storage 216 may store several independent objects that are components of the equipment. For example, the apparatus storage 216 may store the locations of the individual actuators, members, joints, etc. that make up the equipment.

In some embodiments, the apparatus storage 216 may include information related to how various objects interact. The apparatus storage 216 may include boundary conditions for the objects that make up the apparatus. The apparatus storage 216 may include information related to the type of joint that connects two parts of the equipment. For example, two parts may be connected at a pin joint, on a slide, or be rigidly connected. Additionally or alternatively, a joint controlled by a motor may be modeled as a rigid connection with an angle that depends on the position (e.g., rotational position) of the motor. The renderer 214 may receive the equipment model from the apparatus storage 216, provide the motor position (e.g., received from the simulator 218 or a live automation system at the time the simulation is started) prior to rendering, and render the three-dimensional model of the equipment with the angle based on the motor position.

The apparatus storage 216 may include code objects associated with equipment. In some embodiments, equipment may have a predefined control logic associated with it. For example, a crating station may have the necessary control logic to create batches of packages of a particular number. Additionally or alternatively, a particular equipment may have at least predefined input and output variables each of the sensors and actuators associated with the particular equipment. When equipment is added to the model (e.g., using the model builder 212), the code for the control logic managing that equipment and/or the input and output variables for the sensors and actuators associated with the equipment may be automatically generated or available for generation by the code generator 230.

Various levels of code generation may be available depending on information included with the equipment model in the apparatus storage 216. The input and output variables may be generated and associated with the respective points in simulation (for SIL and HIL testing). The inputs and outputs variables may be preconfigured with the appropriate type. For example, an input variable may be configured as a binary input (e.g., contact switch, optical contact, etc.), a resistive element (e.g., a potentiometer measurement), a voltage input, or a digitally communicated value. Similarly, an output variable may be configured as a binary output, or a pulse width modulated value. (binary output, analog output, ranges, etc.). For more complex equipment that combines multiple devices and actuators working together, the associated control system may be automatically generated. In some embodiments, actuators may be combined with a number of sensors to provide packaged functionality. For example, a motor may be combined with multiple optical switches that indicate when the motor or the load of the motor is at a specific position. In some embodiments, the apparatus storage 216 stores an associated code object for each of the available actuators and the respective sensors. The code object may be tagged for automatic generation of an HMI for the given actuator and sensor combination.

The simulator 218 may be configured to perform simulation of the equipment and objects included in the automation system model developed using the model builder 212. The simulation output may be provided to the model builder 212 to generate a sequence of three-dimensional renderings for the simulation (e.g., to create a video). In some embodiments, the simulator 218 performs a dynamic simulation of the forces applied by the actuator motors of the equipment and objects included in the three-dimensional rendering. Additionally or alternatively the motion of a motor is simulated as a PID controller controlling a motor to a position setpoint. The motor may be modeled by appropriate dynamic system equations. For example, a first order system, a second order system, a first order system plus delay, may be used to model the motor. The position of the motor may have a direct response on the position of all the member bodies (e.g., parts) connected to the motor. Simulated actuators (e.g., virtual actuators) may be targets of commands from the process control system (e.g., to perform HIL or SIL testing). In some embodiments, if the position of all motors is known the position of all member bodies of the equipment is known and the position of all points of the automation system can be calculated for the three-dimensional rendering.

Additionally or alternatively, the simulator 218 may simulate a portion of the model of the automation system for which there is not a rigid connection. For example, rollers of conveyor platforms are not directly connected to the object they convey. The coefficient of friction between the object and the roller can be used to determine the motion of objects conveyed by the rollers. For example, some slip between object speed and roller speed may be expected initially before the object approaches the speed of the rollers it is traversing. The simulator 218 may use suitable dynamic system equations to simulate the objects speed and/or displacement across the conveyor platform.

In some embodiments, simulation parameters (e.g., coefficients of friction, object masses, motor parameters, approximate first order systems, etc.) are not well known at the time simulation. The model of the automation system may be calibrated as testing is performed. For example, the rendering and code generation system 200 may provide a first stage of SIL and/or HIL testing to be performed assuming default parameters. Once data is collected from the physical (e.g., live, operating, etc.) automation system, the simulator 218 may calibrate the parameters based on collected data. For example, the simulator 218 may perform system identification to determine optimal (e.g., best fit, etc.) parameters for the simulation based on an objective function including an error between the simulated model of the automation system and actual measurements from the automation system.

The simulator 218 may be configured to simulate the automation system by repeated execution of a dynamic update equations. For example, the simulator 218 may update internal states of the model of the automation system based on a state update function:${x}_{t} + T = f \left({x}_{t}{, u}_{t}\right) ,$ where *xₜ* is the state at time *t, uₜ* is the applied input (e.g., actuator values) and *T* is the sample time (or time between the values for the simulated states). The simulator 218 may simulate the model of the automation system faster than real time, in real time, or slower than real time. Simulation output may be streamed to the renderer 214 at the same speed the information is calculated. Additionally or alternatively, simulations may be saved (e.g., buffered, etc.) and played back by the renderer 214 at any speed. For example, the operator may watch a fast-moving automation system in slow motion and/or a slow-moving automation system faster than real time.

The UI generator 222 can provide instructions to the one or more UI clients 102 (e.g., JavaScript, Cascading Style Sheets) that instruct the one or more UI clients 102 how to generate the user interface within a client application (e.g., an internet browser, a proprietary application, etc.). In some embodiments, the UI generator 222 provides application programming interfaces (APIs) that allow for user interaction with the rendering and code generation system 200. For example, the application may provide a user interface that executes a callback to an API to start a simulation, to add another apparatus to the model, or begin code generation.

The HMI generator 220 may be configured to generate a UI similar to that of the UI generator 222. One difference between the HMI generator 220 and the UI generator 222 may be that the UI produced by instructions from the HMI generator 220 may send commands to the one or more process controllers 300 and/or the simulated controllers managed by the simulator 218. The configuration and/or code used by the HMI generator 220 may be generated by the code generator 230, for example, based on tagged code object in the process control code. The HMI generator 220 may be configured to generate a number of HMI representation (e.g., instructions, styles, windows, displays, etc.) for producing a view within a UI generated on the one or more UI clients 102.

The code generator 230 may be configured to generate (i) process control code based on a model of the automation system and/or (ii) HMI code and/or configurations based on the process control code for the automation system. The process control code may be generated in a variety of programming languages (e.g., C, ladder logic, etc.). The code generated by the code generator 230 may depend on the application and common programming languages used in the setting the code will be deployed. In some embodiments, HMI code is generated for the actuators of the automation system. Additionally or alternatively, the HMI generator 220 may include customizable code, and the code generator 230 generates an configuration for the HMI generator 220. The configuration may be described using a suitable object description language (e.g., XML, JSON, etc.).

The code generator 230 may include standard objects 232. The standard objects may be a set of common equipment (e.g., actuators, devices, apparatuses, etc.). The standard objects 232 may include equipment at any level within an automation system hierarchy. For example, the standard objects 232 may include full conveyor systems and individual motors. In some embodiments, a high-level standard object include several lower-level standard objects such as actuators, motors, sensors, etc.

Each of the standard objects 232 may be associated with a device or apparatus available on the palette in the model builder 212. When a device is selected for the model, the standard object may be added to the model. When code is generated, a variable or property of the standard object for each of the inputs and/or outputs may be included in the code. In some embodiments, the variable may become preconnected to the object (e.g., by a network address etc.).

The standard objects 232 may also be tagged for compatibility with the HMI generator 220. For an object to be compatible with the HMI generator 220, it may satisfy an object interface or a standardized class format (e.g., it may have a specific set of properties and/or functions) that may be used to generate the HMI. For example, all tagged objects may have a predefined control panel view. The control panel view may have a number of forms (e.g., sizes, layouts, etc.). The control panel view may have small or overlay form and/or a detailed form. The small form of the control panel view, for example, may be displayed overlaying a larger diagram (e.g., schematic, rendering, image, etc.) of the equipment and/or the automation system. The detailed view may open in a separate window and provide additional control and/or measuring options.

In some embodiments, the control code is an intermediate representation including the standard objects 232 that is used to generate the code that is ultimately executed by the one or more process controllers 300. For example, the intermediate representation may include the standard objects 232 defining the status indicators and control elements associated with an actuator. The code executed by the one or more process controllers 300 may have a representation where each status indicator is an independent variable driven by one or more inputs from the automation system and each control element is also an independent variable configured to issue a command to the respective actuator.

The code generator 230 may scan the code for tagged objects and generate an HMI configuration or code based on the tagged objects. Each time a tagged object is encountered the code generator 230 may execute an interface function from the standardized class format so that the appropriate information is included in the HMI configuration or code. For example, upon finding a tagged object, the code generator 230 may add an appropriate button layout, button callbacks, etc. to the configuration of the HMI. In some embodiments, the code generator 230 generates default configurations for untagged objects. For example, a template control panel may be generated to provide the designer of the HMI a starting point to quickly develop a control panel for the object.

The HMI configuration or code may define a control panel with a number of status indicators and a number of control elements and a number of control elements. The status indicators may refer to locations where feedback from the automation system can be displayed. For example, a status indicator may include text that updates to display a number or an area (e.g., a bubble, box, etc.) whose formatting (e.g., color, brightness, saturation, etc.) can be updated based on the on feedback from the automation system. The control elements may refer to buttons or other interactive UI elements that can be used to send commands to the actuators, change an operating mode of the process control system, etc. The status indicators may include a linked data source from where the information to be displayed is received. The linked data source may, for example, include a network address or other identifier that allows for communication between the source and the status indicator. A linked data source may represent, for example, a sensor that provides feedback from the automation system. A linked data source may also represent an output form the process control system (e.g. indicating a command sent to the automation system). The control elements may include a respective actuator to which the commands are to be sent. Similar to the linked data source the respective actuator may also be a network address or suitable identifier. The linked data sources and/or respective actuators may be populated by the code generator 230 at the time the code is generated (e.g., using the identification mechanism in the code to send commands or receive inputs from a particular device).

The code generator 230 may be configured to generate an HMI configuration for code generated by the code generator 230 from the model of the automation system. Additionally or alternatively, the code generator 230 may be configured to generate an HMI configuration for manually developed code. In some embodiments, the code generator 230 generates the HMI configuration for objects tagged as conforming to a particular object interface. The tags can be included in the standard objects 232 associated with an apparatus added to the model of the automation system and/or the tags may be included the standard objects 232 that are used during manual code generation.

The code generator 230 may include a role associator 234. The role associator 234 may be configured to associate a role with access to a specific status indicator and/or control element. For example, each UI element of the HMI configuration may include a role property indicating the roles for which the button can be accessed. The role associator 234 may include default roles (e.g., user, operator, admin) and associate the roles to the elements in a predefined manner. In some embodiments, the role associator 234 provides the ability to define custom roles that can be added to particular status indicators and/or control elements. For example, a demo role may be generated to allow control of a demonstrative conveyor platform that does not affect plant operations.

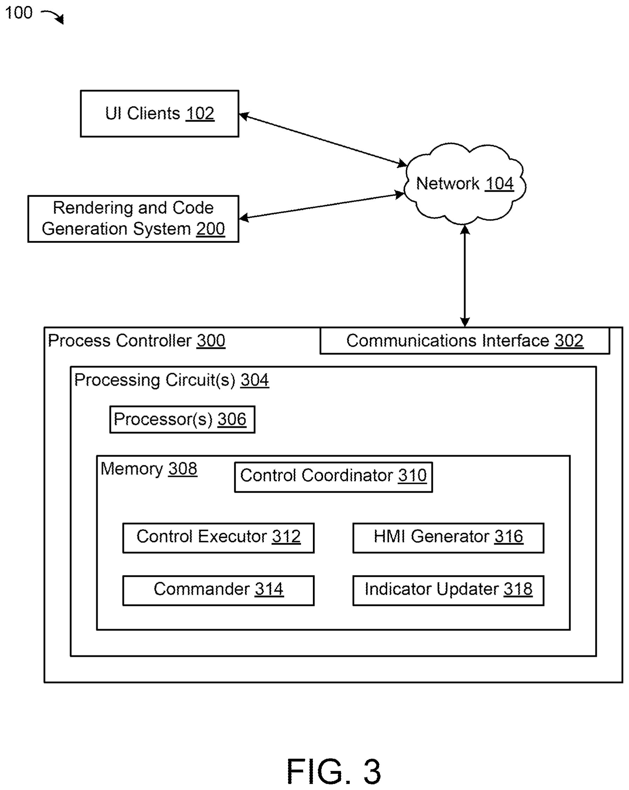

FIG. 3 shows an illustrative block diagram of a process controller 300. The process controller is shown to have a communications interface 302, one or more processing circuits 304, one or more processors 306 and memory 308. The configuration of the communications interface 302, the one or more processing circuits 304, the one or more processors 306, and the memory 308 may have any of the configurations described with respect to the same components of the rendering and code generation system 200. It is noted that the configuration of the one or more process controllers 300 is not limited to the same configuration as the rendering and code generation system 200. For example, the rendering and code generation system 200 may be distributed across several processing circuits and processors, whereas the process controller 300 may be an edge device executed on a single processor or a single processing integrated circuit. The one or more process controllers 300 are shown to include a control coordinator 310 (e.g., to control the execution of the various instruction sets and components of the one or more process controllers 300), a control executer 312, a commander 314, an HMI generator 316, and an indicator updater 318.

The control executer 312 may be configured to execute one or more control algorithms. A control algorithm may perform calculations that generate a control action (e.g., value, command, etc.) to communicate to an actuator of the automation system. The control algorithm may calculate the control action based on the values of several sensors (e.g., feedback) from the automation system. The control executer 312 may execute a control algorithm on a periodic basis (e.g., every 10 seconds, every 100 ms, etc.). Additionally or alternatively, execution of a control algorithm may be triggered by one or more events. For example, the control executer 312 may trigger execution of the control algorithm or portion thereof after a measured value changes by more than a prescribed threshold (e.g., a change-of-value (COV) threshold), after a contact or optical switch changes state, or by any other event that may require updating the output of the control algorithm.

The HMI generator 316 may be substantially similar to the HMI generator 220 of the rendering and code generation system 200. For example, the HMI generator 316 may communicate instructions to generate the HMI on the one or more UI clients 102. The HMI generator 316 may also be configured to generate an HMI for a connected display.

The commander 314 may be configured to generate electronic control signals for the actuators of the equipment. The electronic control signals may be in the form of digital communications provided to the actuators. Additionally or alternatively, the electronic control signals may be analog values for the actuators that communicate a particular value, position, motion, etc. for the actuator. The commander 314 may acquire a configuration for the outputs to be commanded from the process control system code. For example, the code generator 230 may generate code that includes an appropriate output type for the type of object that was included. The actuators may respond to the electronic control signals to cause a change in the automation system.

The indicator updater 318 may be configured to receive electronic signals from sensors of the automation system. The electronic signals may be in the form of digital communications provided by smart sensors. Additionally or alternatively, the electronic control signals may be analog, for example, voltages and/or resistances that are a function of the measured variable. The indicator updater 318 may acquire a configuration for the sensor input indicating the type of input to expect and, if applicable, a calibration curve that maps the received electric signal to a measured value. The code generator 230 may generate code that includes an appropriate input type for the type of object or status indicator that was included as well as the calibration curve. The calibration curve may be updated over time to compensate for changes in the sensing mechanism.

After receiving a measurement, the indicator updater 318 may cause a message to be sent to the one or more UI clients 102 to update any HMI including a status indicator for the updated measurement. In some embodiments, messages are sent to the one or more UI clients 102 if the change in the measured value is above a COV threshold. Additionally or alternatively, the indicator updater 318 may be configured to store the measurements in a known location where the one or more UI clients 102 presenting an HMI can acquire the appropriate information to use when creating the user interface.

### User Interactions

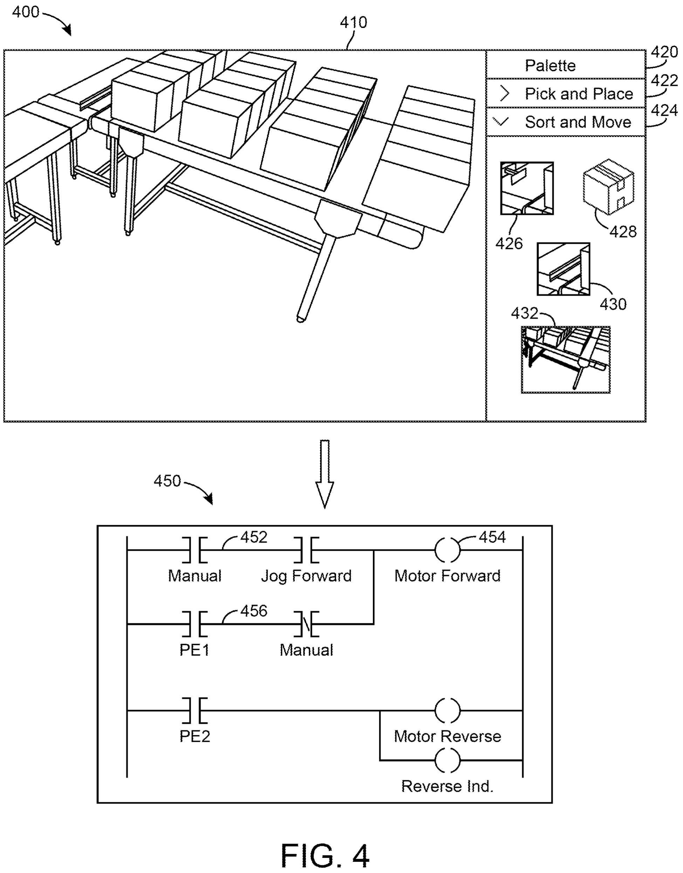

FIG. 4 shows an illustrative view of a three-dimensional rendering and model building UI 400 according to some embodiments. The three-dimensional rendering and model building UI 400 is shown to have a rendering area 410 for displaying a three-dimensional rendering of the modeled automation system and a model builder palette 420 for including various devices, actuators, and apparatuses that may be used as part of the model.

The model builder palette 420 may include several groupings of devices that may be used to build a model of the automation system. The groupings are shown as accordion tabs 422 and 424. An accordion tab (e.g., accordion tab 422 or 424) may include one or more devices for the automation system. For example, the sort and move accordion tab 424 may include a counting aggregator 426, a package 428, a gate 430, and a conveyor platform 432.

When a device, apparatus, actuator, etc. is pulled from the palette and added to the rendering area 410 a number of background operations may be performed. The drag and drop interaction may trigger a callback to an API of the rendering and code generation system 200. Specifically, a model builder object associated with the device may be added to the model in the rendering and code generation system 200. The location of the object may be updated to the location where the device was added within the rendering area 410. In some embodiments, the model building objects include the standard objects 232 for which code and/or an HMI may be generated.

The UI may also include a view (e.g., tab, window, screen, etc.) to display the process control code shown as ladder logic 450. In some embodiments, the process control code is text-based code (e.g., C, C++, etc.). Additionally or alternatively, the process control code may be graphical (e.g., ladder logic or signal flow based). As devices, apparatuses, and/or actuators are added to the rendering area 410, additional code elements may be added. For example, adding a single direction motor actuator (e.g., for a conveyor) may automatically generate a rung 452 for manual operations of the motor as well as an output for the forward activation of the motor 454. The equivalent in other programming languages may be used in embodiments where ladder logic is not the language of the generated code. A process control system designer may add additional rungs (e.g., rung 456) to customize the generated code. In some embodiments, the code generator 230 is configured to determine if a change to the generated process control code (e.g., a customization) is compatible with further auto generation of the code. The code generator 230 may store one or more versions of the code, for example, modified code that can no longer be synchronized with the devices of the rendering area 410 due to a customization and the default code generation based on equipment (e.g., actuators, devices, apparatuses, etc.) in the model of the automation system.

In some embodiments, certain devices may be connected to other devices in the rendering area 410. For example, a gate 430 may be coupled with a specific location on a conveyor platform 432. The rendering area 410 may have snap functionality. The snap functionality may cause a connectable device close to a point of connection to snap to the connection point. Connecting devices may speed up the design of the model of the automation system. Additionally, connecting devices may increase the complexity of the generated code. For example, when two devices are connected the code generator 230 may generate code that includes both devices in a dependent manner.

The code that is generated as well as the objects in the rendering area 410 and the model builder palette 420 may be hierarchical. For example, if an individual actuator is inserted into the model, the code generator 230 may be able to generate only the code required for manual override of the actuator (e.g., rung 452 in the case of a single direction, continuous motor). More complicated devices or combinations thereof may include additional automatically generated code due to the existence of the device or the combination thereof. For example, a counting station may include a counting aggregator 426, a gate 430 and two conveyor platforms 432. All the code to have the counting aggregator slide an aggregation of a number of packages to a first conveyor platform and open the gate if there is an error and the packages need to be re-aggregated may be included in the ladder logic 450 upon moving the counting station from the model builder palette 420 to the rendering area 410.

The code (e.g., generated from the model for the automation system, customized code, or manually created code) may be used to generate an HMI for the process control system. The HMI may provide views for various levels of the control system allowing an operator to quickly check the status of the automation system. The HMI may provide status indicators within those views. The status indicators may include control panel lights, text-based values, or any other suitable method for communicating information to the operator. The HMI may also provide interactive control elements that allow an operator to switch the mode of operation (e.g., automatic or manual mode, a mode within the automatic mode, etc.) and/or to manually operate any of the actuators (e.g., manually causing the actuators to activate, move to a certain location etc.). The code generator 230 may scan the code for tags indicating that a particular actuator has an HMI configuration available.

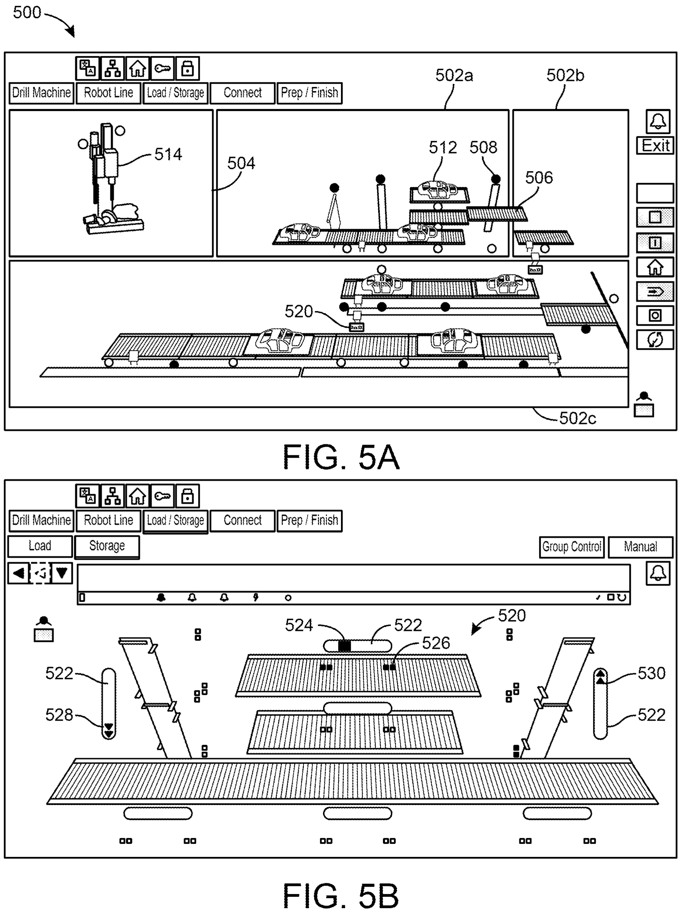

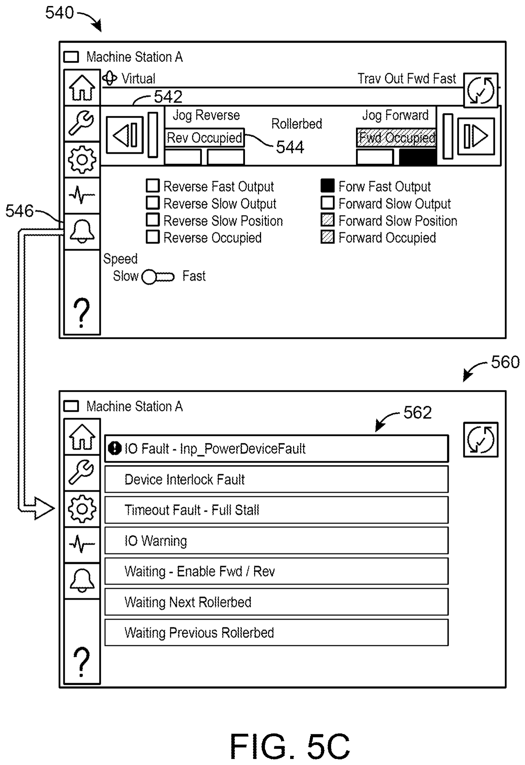

FIGS. 5A-5C are views of a generated HMI according to some embodiments. FIG. 5A shows a high-level view 500 of cells 502a-c each including various conveyor platforms (e.g., conveyor platform 506) and a drill station 504 including a drill press 514. FIG. 5B shows a cell view 520 of an individual cell 502c having several conveyor platforms and global objects with status indicators for the various actuators associated with the cell. FIG. 5C shows faceplate views 540 and 560 according to some embodiments.

Each tagged actuator shown in FIGS. 5A-5C may have one or more associated HMI objects that may be generated by the code generator 230. The HMI objects (e.g., HMI objects 522) may include one or more status indicators and/or one or more control elements. The HMI may display the HMI objects including the one or more status indicators (e.g., status indicators 508, 510, and 524-530) and the one or more control elements (e.g., the jog button 542). The code generator 230 may generate one or more respective HMI objects for the actuator at the time the HMI configuration or code is created. The code generator 230 may also generate HMI objects for tagged devices of the process control code. For example, a conveyor platform may have an HMI image that may or may not be coupled with a respective HMI object for its motor. An HMI object may be generated for the same device or actuator at various levels of the HMI. A simplified HMI object may be generated for views at the area level (e.g., the high-level view 500), whereas a more detailed object may be generated for cell level views (e.g., the cell view 520).

Each HMI object and/or the status indicators and/or control elements thereof may have a number of properties that describe its operation. A status indicator may have a linked data source (e.g., the sensor, contact switch, optical switch, etc.) from which the status indicator receives its information; an indicator type (e.g., an indicator bubble, an object, etc.) and a location (e.g., a cell view). A control element may have a linked data source (e.g., motor, actuator etc.) to which commands are to be sent; an element type (e.g., button, text-entry, etc.) and a location (e.g., within a view). For example, a detailed HMI object for a n-position motor (e.g., two-position motor HMI object 522) may include a forward direction indicator 530, a backward direction indicator 528, a manual mode indicator 524, and a number of position indicators (e.g., position indicator 526). The linked data source for the HMI indicators may be automatically populated directly from the code.

In some embodiments, the location of an HMI object (e.g., indicator, control element, etc.) is automatically populated with an initial location at the time the code generator 230 generates the HMI configuration. The indicator type may be specified by the standard object 232 and may depend on the hierarchical level of the view for which the HMI object is being generated. For example, a n-position motor may include only an operating indicator (e.g., the operating indicator 508) if the motor is in operation at the high-level view 500. A manual override indicator 510 may also be generated for a collection of motors and/or other actuators that are currently in manual mode.

In some embodiments, initial locations for the HMI objects are generated based on a default layout. For example, the code generator 230 may lay out each HMI object in a grid. The UI from the HMI generator 316 may provide a mode for an operator or administrator to modify the layout of the HMI and organize the HMI to a more suitable configuration (e.g., matching the location of the equipment within the automation system). Additionally or alternatively, the model of the automation system (e.g., as designed using the model builder 212 (e.g., by way of the three-dimensional rendering and model building UI 400) may be stored with the tagged actuator and an improved initial locations for the HMI objects may be populated by the code generator 230 based on the model of the automation system. While organizing the HMI, the user may remove HMI objects, move HMI objects, define additional cell views within which additional views may be defined, or perform any other configuration operation allowed by the UI from the HMI generator 316.

In some embodiments, control groups may be automatically generated by the code generator 230. A control group may refer to a group of like equipment and/or actuators that may be commanded together. For example, all conveyor platforms in a single linear layout may be part of a control group wherein manual forward or reverse commands may be distributed to conveyor motors within the linear layout. In some embodiments, control groups are generated automatically based on a similarity criterion between equipment. The similarity criterion may be evaluated based on a number of factors including, but not limited to, an actuator type, an actuator size (e.g., power rating, etc.), or a naming scheme for the device or actuator. Control groups may also be specified by the user, for example, by selecting equipment (e.g., actuators, devices, apparatuses, etc.) within the UI.

An HMI indicator (e.g., the two-position motor HMI object 522) may be configured to automatically launch a faceplate UI when interacted with (e.g., after a double click, etc.). FIG. 5B shows a faceplate view 540 for a rollerbed motor, according to some embodiments. A faceplate view 540 may have additional indicators that are not visible on the HMI object and may represent a more detailed view. For example, the faceplate view 540 shows a reverse occupied indicator 544 not available in the cell view 520. Additionally, the faceplate view 540 may include one or more control elements that can be used to manually adjust the motor position when the automation system is in manual mode. For example, the jog reverse button 542 may be configured to issue a command to the rollerbed motor if clicked while in manual mode.

The faceplate view 540 may also indicate alarms associated with the actuator. For example, the alarm button 546 may indicate a fault with a bubble or similar indicator superimposed over the corner of the button. Clicking the alarm button 546 may launch an alarm view 560. In some embodiments, the alarm view 560 includes a fault list 562 to list a number of faults. Clicking or hovering over a fault may provide additional information related to the fault.

### Flow of Operations

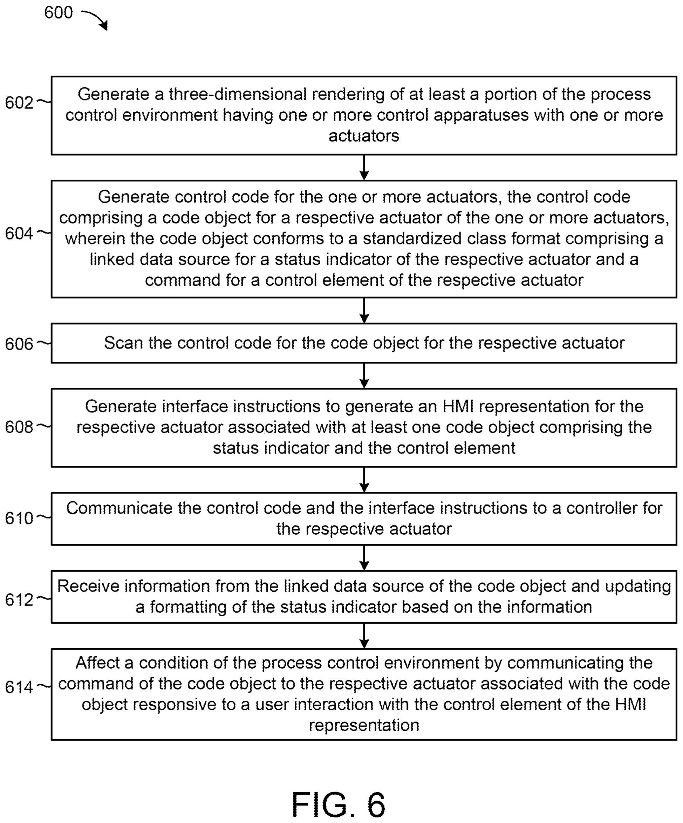

FIG. 6 shows flow of operations 600 for controlling an equipment of an automation system using a generated HMI according to some embodiments. The flow of operations 600 may include generating a three-dimensional rendering of at least a portion of the process control environment having one or more control apparatuses with one or more actuators in operation 602. The operation 602 may be performed by a system designer using the model builder 212. For example, the system designer may drag various process control equipment from a palette in order to generate a model of the automation system and the three-dimensional rendering thereof. The three-dimensional rendering model may be used to perform simulations of the automation system and include virtual actuators that may correspond to a physical actuator in the physical automation system.

In some embodiments, the flow of operations 600 includes generating control code for the one or more actuators in operation 604. The control code includes a code object (e.g., one of the standard objects 232) for a respective actuator of the one or more actuators and the code object conforms to a standardized class format including a linked data source for a status indicator of the respective actuator and a command for a control element of the respective actuator. For example, the control code may be generated by the code generator 230 based on the three-dimensional rendering model using the standard objects 232. In some embodiments, code for the entire process control system is not generated. For example, operation 604 may include generating a portion of code or a template that includes the code object (e.g., output from the process control system or input to the process control system) associated with the respective actuator. A process control system designer can add or modify the code to perform the specific processes required, but does may not need to associate an actuator with the code object, potentially saving time and eliminating an error prone task.

In some embodiments, the control code is an intermediate representation including the standard objects 232 that is used to generate the code that is ultimately executed by the one or more process controllers 300. For example, the intermediate representation may include the standard objects 232 defining the status indicators and control elements associated with an actuator. The code executed by the one or more process controllers 300 may have a representation where each status indicator is an independent variable driven by one or more inputs from the automation system and each control element is also an independent variable configured to issue a command to the respective actuator.

The flow of operations 600 may include scanning the control code for the code object for the respective actuator in operation 606. For example, the code generator 230 may generate code objects that include a tag indicating that the code object implements a code interface (e.g., conforms to a standardized class format). The code interface may provide functions and/or properties allowing the code generator 230 to generate a configuration for an HMI representation or display (e.g., instructions, layout, configuration, etc.) for the actuator.

The flow of operations 600 may include generating interface instructions to generate an HMI representation for the respective actuator associated with at least one code object comprising the status indicator and the control element in operation 608. The instructions may be in the form of code and/or a configuration (e.g., in XML, JSON, etc.) describing the HMI representation (e.g., display, window, etc.). In some embodiments, several forms of the HMI display for the actuator may be generated. For example, a simplified HMI display for a global or area wide view, a standard HMI display for a portion of the automation system or a station view, and a detailed HMI display for a pop-out window may all be added to an HMI configuration based on identified code objects tagged for HMI creation.

The flow of operations 600 may include communicating the control code and the interface instructions to a controller for the respective actuator in operation 610. The control code may be communicated to the one or more process controllers 300 to be executed. The HMI generated from the control code may be automatically configured to receive or acquire data from the various data sources of the one or more process controllers 300. For example, the HMI generated may include a status indicator having a mapped identifier (e.g., network location, reference, unique identifier, etc.) from which the data is received. The HMI generated may also include control elements having a mapped identifier indicating where to send commands associated with the actuator of the HMI.

The flow of operations 600 may include receiving information from the linked data source of the code object and updating a formatting of the status indicator based on the information in operation 612 to affect a condition of the process control environment by communicating the command of the code object to the respective actuator associated with the code object responsive to a user interaction with the control element of the HMI representation in operation 614. The mapped identifier provides a path to or from the HMI to a point in the one or more process controllers 300 and to the respective actuator or from the respective sensor, contact switch, optical switch, etc.

### Configurations and Exemplary Embodiments

A system or module is described as configured to perform a function (or described as performing the function) may include embodiments for which the system or module is configured to cause the performance of the function (or is causing the performance of the function). A system or module is described as configured to cause the performance of a function (or described as causing the performance of a function) may include embodiments for which the system or module is configured to perform the function (or is performing the function). Accordingly, a system or module may be embodied by a circuit containing a memory device and processor to perform a function or may be embodied by a memory device storing instructions to cause the performance of the function and may be described with an of the previously mentioned forms.

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements can be reversed or otherwise varied and the nature or number of discrete elements or positions can be altered or varied. Accordingly, all such modifications are intended to be included within the scope of the present disclosure. The order or sequence of any process or method steps can be varied or re-sequenced according to alternative embodiments. Other substitutions, modifications, changes, and omissions can be made in the design, operating conditions and arrangement of the exemplary embodiments without departing from the scope of the present disclosure.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and are considered to be within the scope of the disclosure.

The present disclosure contemplates methods, systems and program products on any machine-readable media for accomplishing various operations. The embodiments of the present disclosure can be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

## Claims

1. A system for generating a human-machine interface (HMI) of a process control environment, the system comprising:
one or more memory devices having instructions stored thereon that, when executed by one or more processors, cause the one or more processors to perform operations comprising:
generating a three-dimensional rendering of at least a portion of the process control environment having one or more control apparatuses with one or more actuators, wherein a respective actuator of the one or more actuators is associated with an object within control code for the process control environment, and the object conforms to a standardized class format comprising a linked data source for a status indicator of the respective actuator and a command for a control element of the respective actuator;
scanning the control code for at least one included object associated with the one or more actuators that conform to the standardized class format;
generating, for an included object of the at least one included object, an HMI representation for the respective actuator associated with the included object comprising the status indicator and the control element;
receiving information from the linked data source of the included object and updating a formatting of the status indicator based on the information; and
affecting a condition of the process control environment by communicating the command of the included object to the respective actuator associated with the included object responsive to a user interaction with the control element of the HMI representation.

2. The system of claim 1, the operations further comprising simulating the three-dimensional rendering of the portion of the process control environment using the control code.

3. The system of claim 1 or 2, wherein the respective actuator associated with the included object is a virtual actuator of the three-dimensional rendering.

4. The system of one of claims 1 to 3, at least one of:
wherein scanning the control code comprises scanning for objects with a tag indicating that the objects conform to the standardized class format;
wherein the command is communicated to all actuators satisfying a similarity criterion with the respective actuator associated with the included object;
wherein the command is of a plurality of commands for a plurality of control elements and the standardized class format further comprises a role indicating one or more control elements of the plurality of control elements to be included in the **HMI** for a user of the role;
wherein generating the three-dimensional rendering is performed using a user interface within which the one or more control apparatuses are arranged to represent the process control environment; and
the operations further comprising generating the control code from the three-dimensional rendering.

5. A method for generating a human-machine interface (HMI) of a process control environment, the method comprising:
generating a three-dimensional rendering of at least a portion of the process control environment having one or more control apparatuses with one or more actuators, wherein a respective actuator of the one or more actuators is associated with an object within control code for the process control environment, and the object conforms to a standardized class format comprising a linked data source for a status indicator of the respective actuator and a command for a control element of the respective actuator;
scanning the control code for at least one included object associated with the one or more actuators that conform to the standardized class format;
generating, for an included object of the at least one included object, an **HMI** representation for the respective actuator associated with the included object comprising the status indicator and the control element;
receiving information from the linked data source of the included object and updating a formatting of the status indicator based on the information; and
affecting a condition of the process control environment by communicating the command of the included object to the respective actuator associated with the included object responsive to a user interaction with the control element of the HMI representation.

6. The method of claim 5, further comprising simulating the three-dimensional rendering of the portion of the process control environment using the control code.

7. The method of claim 5 or 6, wherein the respective actuator associated with the included object is a virtual actuator of the three-dimensional rendering.

8. The method of one of claims 5 to 7, wherein scanning the control code comprises scanning for objects with a tag indicating that the objects conform to the standardized class format.

9. The method of one of claims 5 to 8, at least one of:
wherein the command is communicated to all actuators satisfying a similarity criterion with the respective actuator associated with the included object; and
wherein the command is of a plurality of commands for a plurality of control elements and the standardized class format further comprises a role indicating one or more control elements of the plurality of control elements to be included in the HMI for a user of the role.

10. The method of one of claims 5 to 9, wherein generating the three-dimensional rendering is performed using a user interface within which the one or more control apparatuses are arranged to represent the process control environment.

11. The method of one of claims 5 to 10, further comprising generating the control code from the three-dimensional rendering.

12. A system for generating a human-machine interface (HMI) of a process control environment, the system comprising:
a server configured to:
generate a three-dimensional rendering of at least a portion of the process control environment having one or more control apparatuses with one or more actuators;
generate control code for the one or more actuators, the control code comprising a code object for a respective actuator of the one or more actuators, wherein the code object conforms to a standardized class format comprising a linked data source for a status indicator of the respective actuator and a command for a control element of the respective actuator;
scan the control code for the code object for the respective actuator;
generate interface instructions to generate an **HMI** representation for the respective actuator associated with at least one code object comprising the status indicator and the control element; and
communicate the control code and the interface instructions to a controller for the respective actuator; and
the controller for the respective actuator configured to:
receive information from the linked data source of the code object and updating a formatting of the status indicator based on the information; and
affect a condition of the process control environment by communicating the command of the code object to the respective actuator associated with the code object responsive to a user interaction with the control element of the HMI representation.

13. The system of claim 12, the server further configured to simulate the three-dimensional rendering of the portion of the process control environment using the control code.

14. The system of claim 12 or 13, wherein the command is communicated to all actuators satisfying a similarity criterion with the respective actuator associated with the code object.

15. The system of one of claims 12 to 14, wherein the command is of a plurality of commands for a plurality of control elements and the standardized class format further comprises a role indicating one or more control elements of the plurality of control elements to be included in the **HMI** for a user of the role.
